# EUROPÄISCHE PATENTANMELDUNG

(11) **EP 3 712 499 A1**
(43) Veröffentlichungstag der Anmeldung: **23.09.2020**
(21) Anmeldenummer: 19020134.3
(22) Anmeldetag: 19.03.2019
(51) Int. Cl.: F23K 5/00, F23D 14/02, F23D 14/32, F23D 14/38, F23D 14/62

(54) **BRENNERANORDNUNG**

(71) Anmelder: Linde GmbH, 82049 Pullach (DE)
(72) Erfinder: Steusloff, Ronald, 23992 Neukloster (DE); Eßer, Heinz-Dieter, 52393 Hürtgenwald (DE); Ruh, Daniel, CH 8280 Kreuzlingen (CH)
(74) Vertreter: Lu, Jing

(57) **Zusammenfassung**

Die Erfindung betrifft eine Brenneranordnung (100) mit wenigstens zwei Gaszuführungen (1, 2) zur Zuleitung wenigstens zweier verschiedener Gase, einer Mischstrecke (10), in der die wenigstens zwei verschiedenen Gase miteinander gemischt werden, einer Gasgemischzuleitungsanordnung (11), in der das Gemisch aus den wenigstens zwei verschiedenen Gasen weitergeleitet wird und wenigstens einem Brennkopf (20) zugeleitet wird, in dem das Gemisch verbrannt wird, wobei die Gasgemischzuleitungsanordnung (11) und/oder wenigstens eine der Gaszuführungen wenigstens einen flexiblen Metallschlauch (1, 2, 13, 16, 19, 21) aufweisen.

## Beschreibung

Die Erfindung betrifft eine Brenneranordnung mit wenigstens zwei Gaszuführungen zur Zuleitung wenigstens zweier verschiedener Gase, einem Mischbereich, in dem die wenigstens zwei verschiedenen Gase miteinander gemischt werden, einer Gasgemischzuleitungsanordnung, in der das Gemisch aus den wenigstens zwei verschiedenen Gasen weitergeleitet wird und wenigstens einem Brennkopf zugeleitet wird, in dem das Gemisch verbrannt wird.

### Stand der Technik

In unterschiedlichsten Materialbearbeitungs- und Fertigungsverfahren ist ein Vorwärmen von Werkstücken erforderlich. In bekannten Schweißverfahren erfolgt das Vorwärmen der zu schweißenden Werkstücke aus unterschiedlichen Gründen. Die Hauptgefahr bei mangelnder Vorwärmung liegt in der sogenannten Wasserstoffversprödung in der Wärmeeinflusszone. Auch neigen umwandlungsfähige Stähle bei erhöhten Abkühlgeschwindigkeiten, wie sie ohne Vorwärmen auftreten, dort zur Aufhärtung. Hieraus ergibt sich eine erhöhte Kaltrissneigung im Fügebereich des Werkstücks. Diese Nachteile nehmen zum Beispiel beim Schweißen von Rohren mit zunehmendem Rohrdurchmesser ebenfalls zu. Die erreichbare Härte und damit die Gefahr von Kaltrissen ist dabei im Wesentlichen von der Dicke des zu bearbeitenden Werkstücks, von der zwei- oder dreidimensionalen Wärmeableitung, von vorhandenen Legierungselementen und deren Gehalten, von der jeweiligen Wärmeeinbringung des Schweißverfahrens und/oder von der Bauteiltemperatur abhängig. Letztere kann durch das Vorwärmen beeinflusst werden. Das Vorwärmen verringert die Abkühlgeschwindigkeit des Nahtbereichs und verbessert die Wasserstoffeffusion. Außerdem wirkt es sich günstig auf den Schweißeigenspannungszustand der Schweißverbindung aus. Die erforderliche Vorwärmtemperatur kann jeweils ermittelt und abhängig hiervon die einzubringende Wärme und/oder der Einsatz der jeweiligen Vorwärmeinrichtung bestimmt werden. Insbesondere die Grundzähigkeit des Werkstoffs, dessen Wanddicke, die Nahtform, die eingesetzte Schweißtechnik und die Schweißgeschwindigkeit sind bei der Bestimmung der Vorwärmtemperatur zu berücksichtigen. Grundsätzlich ist ein Vorwärmen bei Verarbeitungstemperaturen von unter 5 °C und bei Überschreitung bestimmter Grenzdicken (vor allem bei hochfesten Stählen) erforderlich. Die Vorwärmtemperatur beträgt beispielsweise 80 bis 200 °C.

Zum Vorwärmen von Werkstücken vor dem Schweißen werden in der Regel vorzugsweise mehrflammige Brenner verwendet, welche aus den unten näher erläuterten Gründen z.B. mit Acetylen und Sauerstoff enthaltenden Brennstoffgemischen bzw. Acetylen und Druckluft enthaltenden Brennstoffgemischen betrieben werden. Das Vorwärmen geschieht zur Vorbereitung eines schweißnahtnahen Bereichs auf dem Werkstück (z.B. Rohr oder Großrohr) für das nachfolgende Anbringen einer Schweißnaht in diesem vorgewärmten und daher zu Beginn des Schweißvorgangs bereits warmen Bereich (warm bedeutet hier zumindest wärmer als die Umgebungsluft).

EP 2724806 A1 offenbart beispielsweise eine Mehrflammenbrenneranordnung, die zum Vorwärmen eines Brennstückes geeignet ist. Dieser weist in einer bevorzugten Ausführungsform eine Speiseleitung auf, die auch als Schaft oder nochmals anders ausgedrückt auch als Rohrleitung bezeichnet werden kann und zweckmäßigerweise zur Zufuhr des Brennstoffs aus einem metallischen Werkstoff gefertigt ist. Durch eine gebogene Ausführung erhält sie eine für die vorliegende Erfindung sehr vorteilhafte Anpassbarkeit an die Form des vorzuwärmenden Werkstücks, also z.B. an die Rundung eines vorzuwärmenden Großrohrs. Fertigungstechnisch eignet sich für eine solche gebogene Ausführung besonders Edelstahl als metallischer Werkstoff. Die Speiseleitung dient dabei gleichzeitig als Brennstoffverteiler und Befestigungseinrichtung für Brennerköpfe. Eine entsprechende Speiseleitung kann beispielsweise gekrümmt sein und hierdurch an die Form eines zu erwärmenden Werkstücks angepasst sein. Bei der Herstellung eines Mehrflammenbrenners wird die Speiseleitung vorteilhaft so verformt, dass sie der entsprechenden Form des Werkstücks im Wesentlichen nachgebildet ist. Das heißt, dass zum Beispiel ein Kreissegment zweckmäßig ist, das denselben Mittelpunkt wie ein vorzuwärmendes (Groß)rohr und einen entsprechend dem größeren Radius (Radius Rohr zzgl. radialem Abstand zwischen Rohr und Speiseleitung) angepasste Biegung aufweist. Darüber hinaus können auch andere Formgebungen vorteilhaft sein.

Nachteilig dabei ist jedoch, dass solche metallischen Brennstoffzufuhren, nachdem sie einmal gefertigt sind, in ihrer Form fest sind. So müssen für unterschiedliche Werkstückgeometrien unterschiedliche Brenneranordnungen gefertigt werden.

Die Anmeldung ist dabei nicht nur auf Brenner zum Vorwärmen beschränkt.

Aufgabe der Erfindung ist demzufolge, die oben genannten Probleme zu lindern oder ganz zu überwinden.

### Offenbarung der Erfindung

Die Erfindung schlägt eine Brenneranordnung gemäß dem unabhängigen Patentanspruch vor. Vorteilhafte Ausgestaltungen ergeben sich aus den Unteransprüchen und der nachfolgenden Beschreibung

### Vorteile der Erfindung

Erfindungsgemäß umfasst eine Brenneranordnung wenigstens zwei Gaszuführungen zur Zuleitung wenigstens zweier verschiedener Gase, eine Mischstrecke bzw. einen Mischbereich, in der bzw. in dem die wenigstens zwei verschiedenen Gase miteinander gemischt werden, eine Gasgemischzuleitungsanordnung, in der das Gemisch aus den wenigstens zwei verschiedenen Gasen weitergeleitet wird und wenigstens einem Brennkopf zugeleitet wird, in dem das Gemisch verbrannt wird, wobei die Gasgemischzuleitungsanordnung und/oder wenigstens eine der Gaszuführungen wenigstens einen flexiblen Metallschlauch aufweisen.

Ein flexibler Metallschlauch ist ein biegsames Element, das auch noch nach der Herstellung der Brenneranordnung eine Anpassbarkeit der Brenneranordnung an ein Werkstück erlaubt. Insbesondere bei vorzuwärmenden Rohren mit unterschiedlichem Durchmesser ist solch eine Brenneranordnung gegenüber dem Stand der Technik klar im Vorteil. Eine Genauigkeit bei der Positionierung wird verbessert. Dem Benutzer wird ein einfacheres Handling ermöglicht. Eine einzige Brenneranordnung passt zu verschiedenen Werkstückgeometrien, was mit einer Kostenreduktion einhergeht. Außerdem sind durch den wenigstens einen flexiblen Metallschlauch freiere und spezifischere Brennerformen möglich. Im Vergleich zu Gummischläuchen sind die mechanische Stabilität, die Temperaturbeständigkeit und die Lebensdauer erhöht. Flexible Metallschläuche erlauben dem Benutzer, die Ventile und andere Steuervorrichtungen bzw. einen Maschinenschaft mit Einstellventilen der Brenneranordnung bei der Benutzung so zu positionieren, dass sie nicht von den Brennerflammen beschädigt werden und das sich diese in einem für den Bediener optimalen zugänglichen Bereich befinden.

Die Gasgemischzuleitungsanordnung besteht aus sämtlichen Elementen, die zwischen der Mischstrecke (einschließlich derselben) und dem Brennerkopf oder den Brennerköpfen angeordnet sind. Als Gasgemischzuleitungsanordnung ist somit insbesondere ein Bereich zwischen der Mischstrecke und dem Brenner bzw. einem entsprechenden Verteilerrohr des Brenners zu verstehen.

Insbesondere ist wenigstens eine der wenigstens zwei Gaszuführungen an eine Sauerstoffzufuhr und/oder eine Druckluftzufuhr angeschlossen und/oder wenigstens eine der wenigstens zwei Gaszuführungen ist an eine Brenngaszufuhr angeschlossen, beispielsweise an eine Acetylenzufuhr. Auf diese Weise lässt sich bevorzugt ein Brenngas -Druckluft-Gemisch und/oder ein Brenngas-Sauerstoff-Gemisch, z.B. ein Acytelen-Druckluft-Gemisch und/oder ein Acytelen-Sauerstoff-Gemisch, in der Mischvorrichtung erzeugen, das sehr solide Brenneigenschaften bei hohen Flammentemperaturen aufweist.

In einer bevorzugten Ausführungsform ist der wenigstens eine flexible Metallschlauch als Metallwellschlauch ausgebildet. Metallwellschläuche sind besonders robuste flexible Metallschläuche.

Denkbar ist, dass der wenigstens eine flexible Metallschlauch mittels Verschraubungen befestigt ist. Auf diese Weise ist eine reversible Anordnung erzielbar. Jedoch sind Verschraubungen nicht beschränkend. So sind auch weitere gasdichte Verbindung möglich, beispielsweise Verschweißungen oder Flanschverbindungen

Bevorzugt weist die Gemischzuleitungsanordnung eine Verteilerleitungsanordnung auf, an der wenigstens zwei Brennköpfe angeordnet sind. Eine solche Verteilerleitungsanordnung kann eine zweckmäßige Anzahl an Brennköpfen aufweisen, beispielsweise drei bis neun oder auch mehr Brennerköpfe. Auf diese Weise ist eine größere Wärmeleistung auf kleinerem Raum erreichbar.

Insbesondere weist die Verteilerleitungsanordnung wenigstens zwei, bevorzugt drei bis acht Verteilerabschnitte auf, die jeweils durch einen flexiblen Metallschlauch miteinander verbunden sind. Auf diese Weise können die unterschiedlichen Verteilerabschnitte in ihrem Winkel zueinander eingestellt und einer Werkstückgeometrie angepasst werden.

Denkbar ist auch, dass wenigstens einer der Brennköpfe mit der Verteilerleitungsanordnung durch einen flexiblen Metallschlauch verbunden ist. Auf diese Weise kann auch hier der Winkel angepasst werden.

In einer vorteilhaften Ausführungsform weist die Gasgemischzuleitungsanordnung vor der Verteilerleitungsanordnung wenigstens einen flexiblen Metallschlauch auf. Auf diese Weise kann die Verteilerleitungsanordnung in ihrem Winkel zu Steuereinheiten und Ventilen angepasst werden.

Bevorzugt weist die Brenneranordnung wenigstens einen Einreihendüsenbrenner auf. Ein derartiger Einreihendüsenbrenner ist ein besonders effizientes Brennerkonzept, das sich vorteilhaft mit einer Brenneranordnung mit flexiblen Metallschläuchen verbinden lässt. Alternativ oder zusätzlich weist die Brenneranordnung bevorzugt wenigstens einen Blockbrenner auf.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einiger Ausführungsbeispiele in den Zeichnungen dargestellt und wird im Folgenden unter Bezugnahme auf die Zeichnungen beschrieben.

### Kurze Beschreibung der Zeichnungen

- Fig. 1: zeigt eine bevorzugte Ausführungsform einer erfindungsgemäßen Brenneranordnung in einer schematischen Darstellung;
- Fig. 2: zeigt eine weitere bevorzugte Ausführungsform einer erfindungsgemäßen Brenneranordnung in einer schematischen Darstellung;
- Fig. 3: zeigt eine weitere bevorzugte Ausführungsform einer erfindungsgemäßen Brenneranordnung in einer schematischen Darstellung;
- Fig. 4: zeigt einen Brennkopf zum Anschluss an eine Ausführungsform einer erfindungsgemäßen Brenneranordnung;
- Fig. 5: zeigt eine weitere bevorzugte Ausführungsform einer erfindungsgemäßen Brenneranordnung in einer schematischen Darstellung.

### Ausführliche Figurenbeschreibung

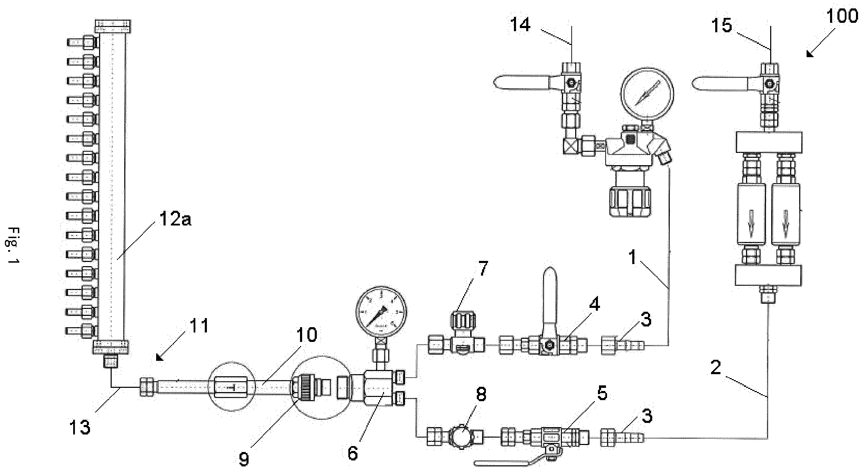

In Fig. 1 ist eine bevorzugte Ausführungsform einer erfindungsgemäßen Brenneranordnung schematisch dargestellt und mit 100 bezeichnet.

Die Brenneranordnung 100 weist zwei Gaszuführungen zur Zuleitung zweier verschiedener Gase auf. Eine Druckluftzuführung und eine Brenngaszuführung, beispielsweise eine Acetylenzufuhr, können jeweils beispielsweise eine Rohrleitung 14, 15 aufweisen oder beispielsweise auch jeweils einen flexiblen Metallschlauch.

Ferner weist die Druckluftzuführung einen der Rohrleitung 14 nachgeordneten Druckluftschlauch 1 auf. Dieser kann als flexibler Metallschlauch oder als Gummischlauch realisiert sein. Die Brenngaszuführung weist einen Brenngasschlauch 2 auf, welcher der Rohrleitung 15 nachgeordnet ist. Dieser kann ebenfalls entweder als flexibler Metallschlauch oder als Gummischlauch realisiert sein.

Der Druckluftschlauch 1 ist an seinem weiteren Ende mit einer Schlauchtülle mit Überwurfmutter 3 verbunden. Diese Schlauchtülle 3 ist wiederum mit einem Schnellschlussventil 4 verbunden. Dieses erlaubt eine einfache Öffnung und Schließung der Druckluftzuführung. Dem Schnellschlussventil 4 nachgeordnet befindet sich ein Einstellventil 7, das eine Druckregulierung ermöglicht.

Der Brenngasschlauch 2 kann an seinem weiteren Ende ebenfalls mit einer Schlauchtülle mit Überwurfmutter 3 verbunden sein, die wiederum an ein Schnellschlussventil 5 angeschlossen ist. Diesem nachgeordnet befindet sich ein Einstellventil 8.

Die Druckluftzuführung und die Brenngaszuführung werden in einem Maschinenschaft 6 zusammengeführt, der über eine Überwurfmutter 9 mit einer Mischstrecke 10 verbunden ist.

Weiterhin weist die Brenneranordnung 100 eine Gasgemischzuleitungsanordnung 11 auf, die einen flexiblen Metallschlauch 13 zum Anschluss an einen Einreihendüsenbrenner 12a aufweist. Einreihendüsenbrenner zeichnen sich durch eine hohe Austrittsgeschwindigkeit aus, wodurch lanzenförmige Flammenformen erzielbar sind. Die Gasgemischzuleitungsanordnung 11 besteht in dieser einfachen Ausführungsform nur aus dem flexiblen Metallschlauch 13. Jedoch ist die Gasgemischzuleitungsanordnung 11 nicht darauf beschränkt. Sie kann ferner beispielsweise ein Rohr oder mehrere Rohre und eine Verteilerleitungsanordnung zur Weiterleitung an einen oder mehrere Brennerköpfe und/oder Brenner aufweisen. Alternativ ist es auch denkbar, dass die Mischstrecke auch direkt mit dem Einreihendüsenbrenner 12a verbunden sein kann.

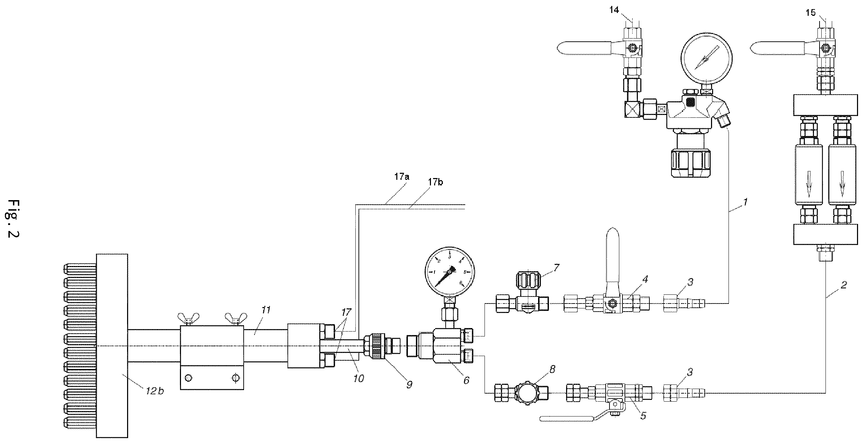

Fig. 2 zeigt eine weitere Ausführungsform einer erfindungsgemäßen Brenneranordnung 100. Gleiche Bezugszeichen bezeichnen gleiche Elemente wie in Figur 1 und werden hier nicht erneut erläutert. Der Unterschied zu Fig. 1 besteht darin, dass hier anstelle eines Einreihendüsenbrenners 12a ein Blockbrenner 12b vorgesehen ist.

Ferner ist zwischen Mischstrecke 10 und Gasgemischzuleitungsanordnung 11 eine Wasserkühlungsvorrichtung 17 mit einer Zufuhr 17a und einem Rücklauf 17b vorgesehen.

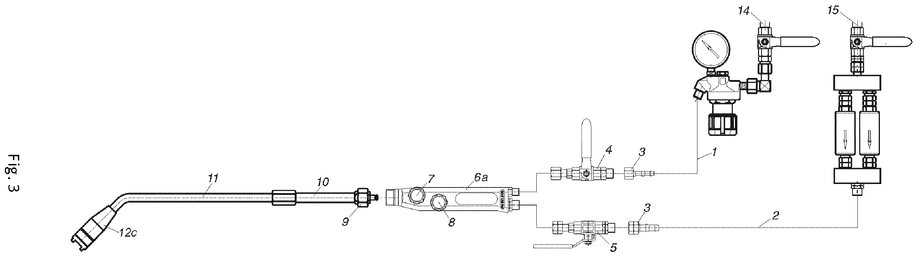

In Fig. 3 ist eine weitere Ausführungsform einer erfindungsgemäßen Brenneranordnung 100 schematisch dargestellt. Gleiche Bezugszeichen bezeichnen gleiche Elemente wie in den Figuren 1 und 2 und werden nicht erneut erläutert. Die in Fig. 3 gezeigte Brenneranordnung 100 ist als ein Sauerstoff- bzw. Druckluftbrenner 12c mit einem Handstück ausgebildet. Die Brenneranordnung 100 weist anstelle des Maschinenschafts 6 ein Griffstück 6a auf, an welchem die Einstellventile 7 und 8 angeordnet sind.

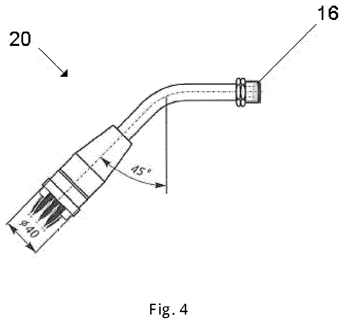

Fig. 4 zeigt einen beispielhaften Brennerkopf 20 zum Anschluss an eine Ausführungsform einer erfindungsgemäßen Brenneranordnung. Der Brennerkopf kann beispielsweise eine Kröpfung unter einem Winkel von hier 45° aufweisen, wobei als Anschlussmittel ein flexibler Metallschlauch 16 vorgesehen sein kann. Der Brennerkopf weist hier einen Durchmesser von 40 mm auf.

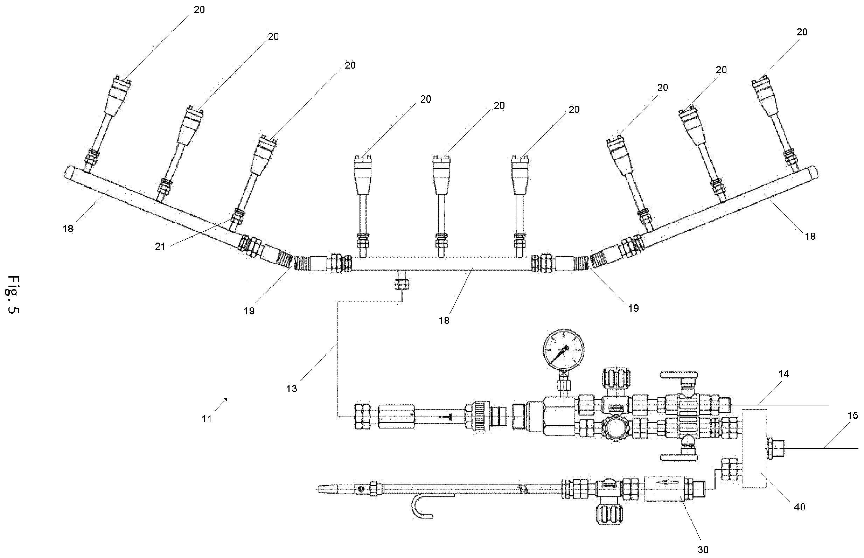

Fig. 5 zeigt eine weitere Ausführungsform einer erfindungsgemäßen Brenneranordnung 100. Diese weist eine Brenngaszuführung 15 mit einem Y-Stück 40 auf, an dem zusätzlich ein Zündbrenner 30 angeschlossen ist. Dieser eignet sich vorteilhaft dazu, die eigentliche Brenneranordnung anzuzünden. Eine Druckluftzuführung ist mit 14 bezeichnet.

In dieser Ausführungsform weist eine Gemischzuleitungsanordnung 11 eine Verteilerleitungsanordnung auf. Diese Verteilerleitungsanordnung weist drei Verteilerabschnitte 18 auf, die durch flexible Metallschläuche 19 miteinander verbunden sind. Die Verteilerabschnitte 18 sind als Rohre ausgebildet, an denen jeweils drei Brennerköpfe 20 angeordnet sind. Die Brennerköpfe 20 können optional jeweils mittels eines flexiblen Metallschlauches 21 mit den Verteilerabschnitten 18 gekoppelt sein. Auch die Leitung 13 zwischen Mischbereich und Verteilerleitungsanordnung kann ganz oder teilweise aus einem flexiblen Metallschlauch gefertigt sein.

Brenngas wie Acetylen wird üblicherweise unter einem Druck von bis zu 1,5 Bar zugeleitet.

Druckluft wird unter einem Druck von bis zu 7,0 Bar zugeleitet.

Die flexiblen Metallschläuche können vorteilhaft Durchmesser zwischen 10 mm und 100 mm aufweisen.

## Patentansprüche

1. Brenneranordnung (100) mit wenigstens zwei Gaszuführungen (1, 2, 14, 15) zur Zuleitung wenigstens zweier verschiedener Gase, eine Mischstrecke (10), in der die wenigstens zwei verschiedenen Gase miteinander gemischt werden, einer Gasgemischzuleitungsanordnung (11), in der das Gemisch aus den wenigstens zwei verschiedenen Gasen weitergeleitet wird und wenigstens einem Brennkopf (20) zugeleitet wird, in dem das Gemisch verbrannt wird, **dadurch gekennzeichnet, dass**
die Gasgemischzuleitungsanordnung (11) und/oder wenigstens eine der Gaszuführungen (1, 2) wenigstens einen flexiblen Metallschlauch (1, 2, 13, 16, 19, 21) aufweisen.

2. Brenneranordnung (100) nach Anspruch 1, wobei wenigstens eine der wenigstens zwei Gaszuführungen (14, 15) an eine Sauerstoffzufuhr und/oder eine Druckluftzufuhr angeschlossen ist.

3. Brenneranordnung (100) nach Anspruch 1 oder 2, wobei wenigstens eine der wenigstens zwei Gaszuführungen (14, 15) an eine Brenngaszufuhr angeschlossen ist.

4. Brenneranordnung (100) nach einem der vorstehenden Ansprüche, wobei der wenigstens eine flexible Metallschlauch (1, 2, 13, 16, 19, 21) als Metallwellschlauch ausgebildet ist.

5. Brenneranordnung (100) nach einem der vorstehenden Ansprüche, wobei der wenigstens eine flexible Metallschlauch (1, 2, 13, 16, 19, 21) mittels Verschraubungen befestigt ist.

6. Brenneranordnung (100) nach einem der vorstehenden Ansprüche, wobei die Gemischzuleitungsanordnung (11) eine Verteilerleitungsanordnung aufweist, an der wenigstens zwei Brennköpfe (20) angeordnet sind.

7. Brenneranordnung (100) nach Anspruch 6, wobei die Verteilerleitungsanordnung wenigstens zwei Verteilerabschnitte (18) aufweist, die jeweils durch einen flexiblen Metallschlauch (19) miteinander verbunden sind.

8. Brenneranordnung (100) nach Anspruch 6 oder 7, wobei wenigstens einer der Brennköpfe (20) mit der Verteilerleitungsanordnung durch einen flexiblen Metallschlauch (21) verbunden ist.

9. Brenneranordnung (100) nach einem der Ansprüche 6 bis 8, wobei die Gasgemischzuleitungsanordnung (11) vor der Verteilerleitungsanordnung wenigstens einen flexiblen Metallschlauch aufweist.

10. Brenneranordnung (100) nach einem der vorstehenden Ansprüche, die wenigstens einen Einreihendüsenbrenner (12a) aufweist.

11. Brenneranordnung (100) nach einem der vorstehenden Ansprüche, die wenigstens einen Blockbrenner (12b) aufweist.
